# EUROPÄISCHE PATENTANMELDUNG

(11) **EP 1 880 603 A1**
(43) Veröffentlichungstag der Anmeldung: **23.01.2008**
(21) Anmeldenummer: 07012135.5
(22) Anmeldetag: 21.06.2007
(51) Int. Cl.: A01K 7/02, A01K 7/04

(54) **Verfahren zur Steuerung des Füllstandes einer Viehtränke sowie Viehtränke**

(30) Priorität: 23.06.2006 DE 202006009971 U
(71) Anmelder: DÜCKER, Hinrich, 27432 Volkmarst (DE)
(72) Erfinder: DÜCKER, Hinrich, 27432 Volkmarst (DE)
(74) Vertreter: Hansen, Jochen

(57) **Zusammenfassung**

Die Erfindung betrifft ein Verfahren zur Steuerung des Füllstands einer Viehtränke mit einem Zulauf und einem Becken, wobei bei Erreichen des maximalen Füllstandes der Zulauf von Wasser gestoppt wird, wobei der Zulauf erst nach vollständigem Entleeren oder Erreichen eines geringen Restfüllstandes des Beckens und/oder nach Ablauf einer voreinstellbaren Zeitspanne wieder aktiviert wird.

Ferner betrifft die Erfindung eine Viehtränke mit einem Zulauf (3) für Wasser, einem Mittel zur Steuerung des Wassefzulaufs und einem Becken (1) zur Bereitstellung des Wassers, wobei das Mittel zur Steuerung des Wasserzulaufs den Wasserzufluss in das Becken (1) bei Erreichen eines Maximalfüllstandes (M) schließt, wobei ein Leerstandssensor (8) im/am Becken (1) angeordnet ist, der beim vollständigen Entleeren oder Erreichen eines geringen Restfüllstandes im Becken (1) das Mittel zur Steuerung des Wasserzulaufs öffnet und/oder dass eine Zeitschalteinrichtung (5) vorgesehen ist, die das Mittel zur Steuerung des Wasserzulaufs periodisch für eine voreinstellbare Zeitspanne in Schließstellung schaltet.

## Beschreibung

Die Erfindung betrifft ein Verfahren zur Steuerung des Füllstands einer Viehtränke mit einem Zulauf und einem Becken, wobei bei Erreichen des maximalen Füllstandes der Zulauf von Wasser gestoppt wird, sowie eine Viehtränke mit einem Zulauf für Wasser, einem Mittel zur Steuerung des Wasserzulaufs und einem Becken zur Bereitstellung des Wassers, wobei das Mittel zur Steuerung des Wasserzulaufs den Wasserzufluss in das Becken bei Erreichen eines Maximalfüllstandes schließt.

Derartige Viehtränken sind meist mit einem als Schwimmerventil ausgebildeten Einlaufventil versehen, das den Wasserzufluss in das Becken bei Erreichen eines Maximalfüllstandes schließt und bei Unterschreiten eines nur geringfügig geringeren Mindestfüllstandes wieder öffnet.

Alternativ ist bei der Firma Dr. Pieper Technologie- und Produktentwickfung, Dorfstraße 34, 16181 Wuthenow eine Viehtränke bekannt, die ein elektrisch betätigtes Einlaufventil, einen Füllstandssensor am Becken und eine Steuereinrichtung aufweist, wobei die Steuereinrichtung mit dem Füllstandssensor und dem elektrisch betätigten Einlaufventil wirkverbunden ist, so dass ebenfalls bei Wasserentnahme durch ein trinkendes Tier die Wasserstandsveränderung im Becken registriert und das Einlaufventil so lange geöffnet wird, bis ein gewünschter Maximalfüllstand des Beckens erreicht ist.

Problematisch ist bei derartigen Beckentränken, dass stets ein größeres Wasservolumen bereitsteht, so dass sich Verunreinigungen darin sammeln können und nach kurzer Zeit zu hygienisch höchst bedenklichen Ablagerungen im Becken führen. Die Ablagerungen begünstigen Algenwachstum, die Einlagerung von Keimen und Krankheitserregern und dergleichen. Bei bisherigen Beckentränken ist es daher erforderlich diese regelmäßig, beispielsweise täglich zu reinigen.

Beispielsweise wird dies bei Beckentränken nach dem Stand der Technik durch schnelles Ablassen des Wasserinhalts und Ausbürsten der Innenseite des Beckens erreicht. Hierzu sind Viehtränken bekannt, die einen großen Ablassstopfen im Becken aufweisen. Alternativ sind sog. Kipptränken bekannt, die sich um eine Längsachse des Beckens zur sofortigen Leerung kippen lassen. Beispielhaft wird auf die Kipptränken, dort LB-Reihe genannt, der Firma SAS La Buvette, Rue Maurice Périn, F-08013 Charleville-Mezieres, Frankreich verwiesen. Auch bei Kipptränken ist eine Reinigung des Beckenbodens erforderlich. Die Firma La Buvette schreibt dazu in ihrem Katalog "Wir haben in der Tat nach einigen Testmonaten mit Prototypen (der Kipptränke) festgestellt, dass sich Ablagerungen auf dem Beckenboden befanden. Deshalb müssen Sie auf jeden Fall das Becken mit einer Bürste reinigen."

Nachteilig ist somit bei bisherigen Viehtränken mit einem Becken zur Bereitstellung des Wassers, dass der Beckenboden regelmäßig gereinigt werden muss. Das manuelle Ausbürsten des Beckenbodens ist dabei zeit-und damit kostenaufwendig.

Aufgabe der Erfindung ist es, eine Viehtränke anzugeben, bei der eine regelmäßige Reinigung des Beckenbodens entbehrlich ist.

Gelöst wird diese Aufgabe mit einem Verfahren zur Steuerung des Füllstandes gemäß Anspruch 1 und einer Viehtränke gemäß Anspruch 4.

Mit diesem Verfahren bzw. dieser Viehtränke wird erreicht, dass das Vieh von Zeit zu Zeit das Becken der Viehtränke - jedenfalls im Wesentlichen - leertrinkt. Dabei werden überraschend beim Austrinken bzw. Ausschlecken des Restwassers im Becken etwaige Ablagerungen, Schwebeteilchen und sonstige Verunreinigungen, die sich im Wasser und am Beckenboden der Viehtränke befinden vom Vieh aufgenommen, so dass eine manuelle Reinigung des Beckens entfallen kann. Insbesondere werden somit Ablagerungen am Beckenrand und Beckenboden sowie Algenwachstum weitestgehend verhindert. Durch das Leertrinken wird quasi eine Austrocknungsperiode realisiert, so dass in den Schmutzpartikeln und Verunreinigungen im Wasser anhaftende Keime und Krankheitserreger sich nicht oder nicht wesentlich vermehren können. Die Wasserqualität bleibt daher ohne gesonderte manuelle Reinigung hygienisch einwandfrei.

Dabei kann die gewünschte Austrocknungsperiode jeweils mit Erreichen des Leerstandes bzw. eines geringen Restfüllstandes oder/und nach Ablauf einer voreinstellbaren Zeitspanne erreicht werden. Dabei wird im ersten Fall das Becken nach Erreichen des Leerstandes bzw. des geringen Restfüllstandes wieder bis zum Maximalfüllstand befüllt, wohingegen in der zweiten Alternative nach Ablauf der voreinstellbaren Zeitspanne der Zulauf wieder geöffnet wird. Selbstverständlich können diese beiden Funktionsabläufe auch kombiniert werden, so dass neben dem Erreichen des Leerstandes bzw. geringen Restfüllstandes zusätzlich eine voreinstellbare Zeitspanne abgewartet wird, bis das Becken wieder bis zum Maximalfüllstand befüllt wird.

Wenn das Mittel zur Steuerung des Wasserzulaufs ein Schwimmerventil ist, das den Wasserzufluss in das Becken bei Erreichen eines Maximalfüllstandes schließt und bei Unterschreiten eines nur geringfügig geringeren Mindestfüllstandes wieder öffnet, wobei ein elektrisch betätigtes Ventil im Zulauf und eine Zeitschalteinrichtung vorgesehen sind, wobei die Zeitschalteinrichtung mit dem elektrisch betätigten Ventil wirkverbunden ist und das elektrisch betätigte Ventil periodisch für eine voreinstellbare Zeitspanne in Schließstellung schaltet, wird eine zeitlich gesteuerte Austrocknungsperiode verwirklicht.

Alternativ ist bei einer Viehtränke mit elektrisch betätigtem Einlaufventil die Zeitschalteinrichtung mit dem elektrisch betätigten Einlaufventil oder der Steuereinrichtung so wirkverbunden, dass das elektrisch betätigte Ventil unabhängig vom Füllstandssensor gemessenen Füllstandes des Beckens periodisch für eine voreinstellbare Zeitspanne in Schließstellung schaltet. Wird nun vom Vieh in der entsprechenden Zeitspanne in Schließstellung des Einlaufventils das Becken der Viehtränke leergetrunken, ergibt sich wiederum eine Austrocknungsperiode. Bei dieser Ausgestaltung ist der Grad der "Austrocknung" abhängig vom Wasserverbrauch für das Vieh.

Erfindungsgemäß wird das zusätzlich installierte oder bereits vorhandene elektrisch betätigte Ventil im Zulauf über eine Zeitschalteinrichtung so angesteuert, dass es periodisch für eine voreinstellbare Zeitspanne in Schließstellung schaltet. Damit wird erreicht, dass das Vieh periodisch wiederkehrend das Becken der Viehtränke leertrinkt (Austrocknungsperiode).

Bei der Ausgestaltung ohne Schwimmerventil (Anspruch 6) kann dadurch, dass ein Leerstandssensor am Becken mit einer Wirkverbindung zur Steuereinrichtung vorgesehen ist, wobei das elektrisch betätigte Ventil nur bei gemeldetem Leerstand des Beckens wieder in Offenstellung schaltbar ausgebildet ist, erreicht werden, dass auch bei außergewöhnlich geringer Nutzung der Viehtränke die erneute Wasserzufuhr erst bei vollständiger Entleerung des Beckens möglich ist.

Aus Gründen der Sicherheit für Mensch und Tier dürfen an wassergeführten Installationen nur Niederspannungsbauteile verwendet werden. Bevorzugt ist somit das elektrisch betätigte Ventil ein Magnetventil mit einer Betriebsspannung von 24 V. In vielen Ställen ist bereits eine Versorgungsleitung 24 V verlegt, so dass die Installation problemlos möglich ist.

Bei der Ausgestaltung mit Schwimmerventil ist das vorgeschaltete elektrisch betätigte Magnetventil ein sog. Schließerventil, das bei elektrischer Ansteuerung in Schließstellung schaltet. Dies ist bevorzugt, da das Magnetventil jeweils nur kurzfristig für die voreinstellbare Zeitspanne in Schließstellung geschaltet sein muss. In der übrigen Zeit ist das Magnetventil in Offenstellung und das mechanisch arbeitende Schwimmerventil regelt den Füllstand in bekannter Weise in der Viehtränke.

Wenn die Zeitschalteinrichtung eine wiederkehrende Periode von 6 h, 12 h, 24 h, 48 h oder 7 Tagen hat, können im Tages-/Wochenrhythmus gleichliegende wiederkehrende Perioden für die Aktivierung der voreinstellbaren Zeitspanne (Austrocknungsperiode) ausgewählt werden. Die wiederkehrende Periode kann anhand von Erfahrungswerten gewählt werden. Bei besonders stark beanspruchten Tränken kann nötigenfalls auch eine kürzere wiederkehrende Periode als ein Tag (24 h), nämlich halber Tag (12 h) oder viertel Tag (6 h) gewählt werden. Sollte die Verschmutzung in der Viehtränke sehr gering sein, kann ggf. auch auf eine längere Periode von 2 Tagen oder gar 7 Tagen zurückgegriffen werden.

Die voreinstellbare Zeitspanne ist in einem Bereich von 5 min. bis 2 h einstellbar. Dabei ist zu berücksichtigen, dass bei den üblichen Trinkgewohnheiten des die Viehtränke nutzenden Viehs im Laufe der voreinstellbaren Zeitspanne der Wasserinhalt im Becken vollständig ausgetrunken sein muss. Andererseits soll die Zeitspanne nicht zu lang gewählt werden, um eine Unterversorgung des Viehs zu vermeiden. Da insbesondere nach dem Melken ein größerer Flüssigkeitsaufnahmebedarf beim Vieh besteht, sollte die Austrocknungsphase nicht unmittelbar nach den Melkzeiten erfolgen.

Um eine gelegentliche manuelle Reinigung des Beckens zu erleichtern, ist das Becken um eine Längsachse kippbar gehaltert. Alternativ und/oder ergänzend ist im Becken ein großer Ablassstopfen vorgesehen. Nach längeren Benutzungszeiträumen (mehreren Monaten) oder bei außergewöhnlicher Verschmutzung kann möglicherweise eine Reinigung des Beckens sinnvoll sein. Dies kann in der bereits bekannten Art durch Auskippen des Beckeninhalts und Reinigung des Beckenbodens mit einer Bürste in der gekippten Stellung oder alternativ durch Ablassen des Wassers durch einen großen Ablassstopfens bei gleichzeitiger Reinigung des Beckenbodens mit einer Bürste, geschehen.

Neben neuen Viehtränken können auch bereits vorhandene Viehtränken durch Einbau der erforderlichen Bauteile zu einer Viehtränke mit erfindungsgemäßer Austrocknungsphase umgebaut werden. Für eine Viehtränke mit Schwimmerventil enthält ein Nachrüstsatz ein Magnetventil (Schließer), eine Zeitschalteinrichtung, vorkonfektionierte elektrische Wirk- und Versorgungsleitungen und Befestigungsmittel. Für die Nachrüstung einer Viehtränke ohne Schwimmerventil enthält ein Nachrüstsatz eine Zeitschalteinrichtung, vorkonfektionierte elektrische Wirk- und Versorgungsleitungen und Befestigungsmittel.

Nachfolgend werden zwei Ausführungsbeispiele der Erfindung anhand der beiliegenden Zeichnungen detailliert beschrieben.

Darin zeigt:
- Fig. 1: in einer schematischen Ansicht eine Viehtränke nach einem ersten Ausführungsbeispiel und
- Fig. 2: in schematischer Ansicht eine Viehtränke nach einem zweiten Ausführungsbeispiel.

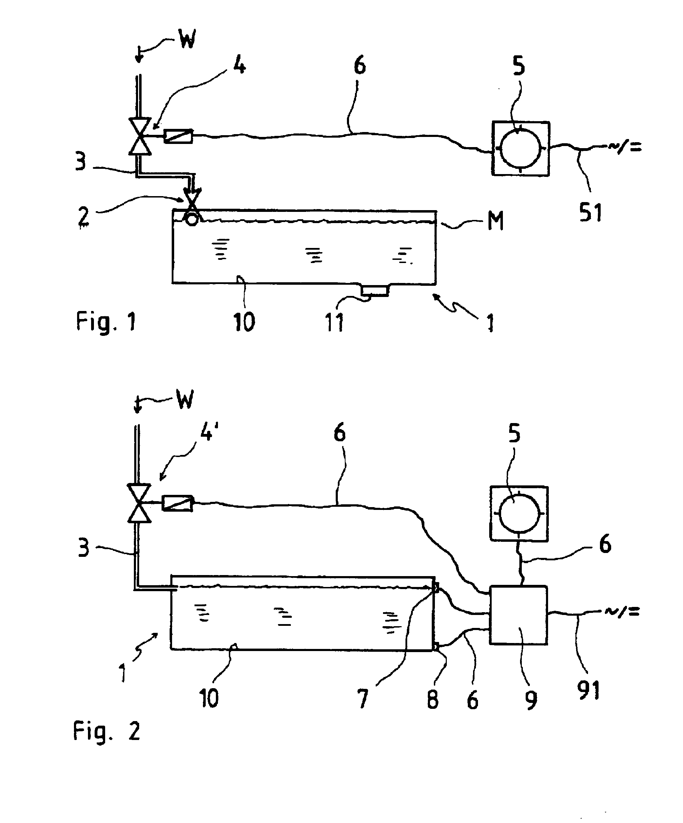

In Fig. 1 ist eine Viehtränke schematisch dargestellt. Die Viehtränke weist ein Becken 1 sowie ein Schwimmerventil 2 auf. Das Becken 1 hat am Boden 10 einen Abflussstopfen 11. Am Schwimmerventil 2 ist eine Wasserzuführleitung 3 angebracht, die an die Trinkwasserversorgung angeschlossen ist und stets Druck beaufschlagt (Pfeil W) ist. In der Zuführleitung 3 ist ein Magnetventil 4 angeordnet, das nicht erregt in Offenstellung steht und nur bei elektrischer Anregung magnetisch in Schließstellung verstellbar ist (Magnetventil vom Schließertyp). Ferner ist der Viehtränke eine Zeitschalteinrichtung 5 zugeordnet, die mittels Stromleitung 51 an ein Stromversorgungsnetz angeschlossen ist. Von der Zeitschalteinrichtung 5 führt eine Wirkleitung 6 zum Magnetventil 4.

In Fig. 2 ist in alternativer Ausgestaltung eine Viehtränke ohne Schwimmerventil schematisch dargestellt. Gleiche Bauteile sind mit gleichen Bezugszeichen versehen.

Die Viehtränke weist ein Becken 1 zur Aufnahme und Bereitstellung des Trinkwassers fürs Vieh auf. Ferner ist eine Zuführleitung 3 für das Frischwasser an das Becken 1 angeschlossen. In der Zuführleitung 3 ist ein Magnetventil 4' eingefügt. Am Becken 1 ist ein Füllstandssensor 7 zur Messung eines Maximal- und Mindestfüllstandes sowie am Beckenboden 10 ein Leerstandssensor 8 angeordnet. Ferner ist eine Steuereinrichtung 9 mit Wirkverbindungen 6 zu den Sensoren 7, 8 und dem Magnetventil 4' vorgesehen. Ferner ist der Steuereinrichtung 9 eine Zeitschalteinrichtung 5 über eine weitere Wirkleitung 6 zugeordnet. Die Steuereinrichtung 9 ist über eine Spannungsversorgungsleitung 91 an ein Stromversorgungsnetz angeschlossen.

Nachfolgend wird die Funktionsweise der erfindungsgemäßen Viehtränken nach den beiden Ausführungsbeispielen erläutert.

Bei der Ausführungsform gemäß Fig. 1 wird der normale Wasserstand der Viehtränke im Becken 1 über das bekannte Schwimmerventil 2 gehalten. Dabei schließt das Schwimmerventil den Frischwasserzufluss durch Zuführleitung 3 sobald ein Maximalfüllstand entsprechend der in Fig. 1 eingetragenen Wasserlinie M erreicht ist. Bei Unterschreiten eines knapp unter dem Maximalfüllstand eingestellten Mindestfüllstandes öffnet das Schwimmerventil 2 so dass Frischwasser nachläuft. Entsprechend ist bei normaler Benutzung der Viehtränke das Tränkebecken 1 stets gefüllt.

An der Zeitschalteinrichtung 5 kann der Landwirt eine gewünschte voreinstellbare Zeitspanne (Austrocknungszeit), beispielsweise 1 h, wählen und eine wiederkehrende Periode von beispielsweise 24 h einstellen. Beispielsweise wird somit die Zeitschalteinrichtung 5 täglich einmal für eine Stunde über Wirkleitung 6 das Magnetventil 4 in seine Schließstellung verstellen. Entsprechend fließt dann auch bei geöffnetem Schwimmerventil 2'kein Frischwasser W über Zuführleitung 3 in das Becken 1. Entsprechend wird durch den Verbrauch des im Becken 1 vorgehaltenen Trinkwassers durch das Vieh der Wasserstand im Becken 1 sinken.

Beim Leertrinken des Beckens 1 durch das Vieh werden überraschend Verunreinigungen im Wasser sowie etwaige Ablagerungen am Boden 10 des Beckens 1 durch das Vieh aufgenommen.

Nach Ablauf der voreingestellten Zeitspanne, hier eine Stunde, wird der Zufluss durch Abfallen des Magnetventils 4 in seine Offenstellung geöffnet, so dass, da auch das Schwimmerventil 2 geöffnet ist, das Becken 1 wieder bis zum Maximalfüllstand mit Frischwasser befüllt wird. Da dieser Vorgang periodisch einmal am Tag abläuft, wird sicher verhindert, dass Ablagerungen am Boden 10 des Beckens 1 im Becken verbleiben. Somit wird der Entstehung von Algenwuchs, Keimbildung und dergleichen vorgebeugt. Eine regelmäßige manuelle Reinigung ist aus hygienischen Gründen somit nicht mehr erforderlich. Allenfalls bei besonders starken und nur zufällig passierenden Verschmutzungen (beispielsweise Einkoten der Tränke) kann eine gesonderte manuelle Reinigung erforderlich sein. Dafür ist beim Ausführungsbeispiel gemäß Fig. 1 der Ablauf 11 im Boden 10 des Beckens 1 vorgesehen. Das verschmutzte Wasser kann darüber schnell abgelassen und die Innenseite des Beckens unter Zufluss von Frischwasser von der Bedienperson gereinigt, beispielsweise abgebürstet werden.

Bei der Ausgestaltung gemäß Fig. 2 ist ein Schwimmerventil nicht erforderlich. Die Wasserzufuhr wird allein vom Magnetventil 4' geregelt, wobei der Füllstandssensor 7 den gewünschten Füllstand im Becken 1 misst und über die Steuereinrichtung 9 das Ventil 4' entsprechend angesteuert wird. Erfindungsgemäß ist zusätzlich die Zeitschalteinrichtung 5 an der Steuereinrichtung 9 angeschlossen, so dass von der Zeitschalteinrichtung 5 aktiviert eine Austrocknungsphase über eine voreinstellbare Zeitspanne gewählt werden kann. Bei der Ausgestaltung gemäß Fig. 2 erlaubt der Leerstandssensor 8 darüber hinaus die Ermittlung des tatsächlichen Leerstandes des Beckens 1.

Sobald über die Zeitschalteinrichtung 5 nach einer wiederkehrenden Periode von beispielsweise 24 h eine erneute Austrocknungsphase beginnt, wird das Magnetventil 4' über die Steuereinrichtung 9 in Schließstellung geschaltet. Nach Ablauf der voreinstellbaren Zeitspanne, beispielsweise 10 min., wird von der Steuereinrichtung 9 das Magnetventil 4' nur in Offenstellung geschaltet, wenn der Leerstandssensor 8 auch Leerstand signalisiert. Sollte daher bei einem niedriger als üblichen Verbrauch von Trinkwasser aus der Viehtränke der Leerstand in dem Becken noch nicht erreicht sein, dauert die Austrocknungsphase entsprechend länger. Mit dieser Ausgestaltung ist somit sichergestellt, dass bei jeder durch die Zeitschalteinrichtung 5 initiierten Austrocknungsphase auch der Leerstand mit dem erwünschten Reinigungseffekt, nämlich Aufnahme von etwaigen Ablagerungen am Boden 10 des Beckens 1 durch das Vieh, erreicht wird. Der etwas höhere schaltungstechnische Aufwand in dieser Ausgestaltung erlaubt somit einen sehr zuverlässigen Reinigungseffekt.

Für beide Ausgestaltungen kann ein Nachrüstsatz für entsprechend vorliegende bekannte Viehtränken zusammengestellt werden. Den Nachrüstsatz kann der Landwirt problemlos selbst an seiner Viehtränke installieren, um den überraschenden Reinigungseffekt durch das Vieh in seiner Viehtränke ausnutzen zu können.

Alternativ kann die Viehtränke auch ohne elektrisches Einlaufventil ausgestaltet sein. Beispielsweise könnte der Zulauf allein durch eine Pumpe, die bedarfsweise Wasser von einem Wasserreservoir fördert, gebildet sein. Bei Aktivierung der Pumpe würde entsprechend das Becken der Viehtränke mit Frischwasser befüllt werden. In minimalster Ausstattung reicht dann ein Füllstandssensor, der den Maximalfüllstand registriert und die Pumpe für den Wasserzulauf deaktiviert (stoppt). In der Steuerung der Pumpe ist dann eine Zeitschalteinrichtung vorgesehen, die die Pumpe erst nach Ablauf einer voreinstellbaren Zeitspanne wieder aktiviert.

Ergänzt werden kann diese Ausgestaltung mit einer Pumpe als Zulauf mit einem Leerstandssensor, der den Leerstand des Beckens erfasst und entsprechend den Zulauf durch Aktivieren der Pumpe unmittelbar oder nach Ablauf einer voreinstellbaren Zeitspanne auslösen kann.

### Bezugszeichenliste

- 1: Becken
- 10: (Becken-)Boden
- 11: Ablassstopfen
- 2: Schwimmerventil
- 3: (Frischwasser-)Zuführleitung
- 4, 4': Einlaufventil, Magnetventil
- 5: Zeitschalteinrichtung
- 51: Versorgungsleitung
- 6: Wirkleitung
- 7: Füllstandssensor
- 8: Leerstandssensor
- 9: Steuereinrichtung
- 91: Versorgungsleitung

- M: Maximalfüllstand
- W: Frischwasserzufuhr
- ~/=: Stromversorgung

## Patentansprüche

1. Verfahren zur Steuerung des Füllstands einer Viehtränke mit einem Zulauf und einem Becken, wobei bei Erreichen des maximalen Füllstandes der Zulauf von Wasser gestoppt wird, **dadurch gekennzeichnet, dass** der Zulauf erst nach vollständigem Entleeren oder Erreichen eines geringen Restfüllstandes des Beckens und/oder nach Ablauf einer voreinstellbaren Zeitspanne wieder aktiviert wird.

2. Verfahren nach Anspruch 1, **dadurch gekennzeichnet, dass** die voreinstellbare Zeitspanne zum Stoppen des Zulaufs nach vorgebbaren Perioden aktiviert wird.

3. Verfahren nach Anspruch 1 oder 2, **dadurch gekennzeichnet, dass** der Zulauf nur bei festgestelltem Leerstand oder geringem Restfüllstand im Becken aktiviert werden kann.

4. Viehtränke mit einem Zulauf (3) für Wasser, einem Mittel zur Steuerung des Wasserzulaufs und einem Becken (1) zur Bereitstellung des Wassers, wobei das Mittel zur Steuerung des Wasserzulaufs den Wasserzufluss in das Becken (1) bei Erreichen eines Maximalfüllstandes (M) schließt, **dadurch gekennzeichnet, dass** ein Leerstandssensor (8) imlam Becken (1) angeordnet ist, der beim vollständigen Entleeren oder Erreichen eines geringen Restfüllstandes im Becken (1) das Mittel zur Steuerung des Wasserzulaufs öffnet und/oder dass eine Zeitschalteinrichtung (5) vorgesehen ist, die das Mittel zur Steuerung des Wasserzulaufs periodisch für eine voreinstellbare Zeitspanne in Schließstellung schaltet.

5. Viehtränke nach Anspruch 4, **dadurch gekennzeichnet, dass** das Mittel zur Steuerung des Wasserzulaufs ein Schwimmerventil (2) ist, das den Wasserzufluss in das Becken (1) bei Erreichen eines Maximalfüllstandes (M) schließt und bei Unterschreiten eines nur geringfügig geringeren Mindestfüllstandes wieder öffnet, wobei ein elektrisch betätigtes Ventil (4) im Zulauf und eine Zeitschalteinrichtung (5) vorgesehen sind, wobei die Zeitschalteinrichtung (5) mit dem elektrisch betätigten Ventil (4) wirkverbunden ist und das elektrisch betätigte Ventil (4) periodisch für eine voreinstellbare Zeitspanne in Schließstellung schaltet.

6. Viehtränke nach Anspruch 4, **dadurch gekennzeichnet, dass** das Mittel zur Steuerung des Wasserzulaufs ein elektrisch betätigtes Einlaufventil (4') ist, wobei ein Füllstandssensor (7) am Becken (1) und eine Steuereinrichtung (9), die mit dem Füllstandssensor (7) und dem elektrisch betätigten Einlaufventil (4') wirkverbunden ist sowie eine Zeitschalteinrichtung (5) vorgesehen ist, die mit dem elektrisch betätigten Einlaufventil oder der Steuereinrichtung (9) wirkverbunden ist, wobei das elektrisch betätigte Ventil (4') unabhängig vom vom Füllstandssensor (7) gemessenen Füllstand des Beckens (1) periodisch für eine voreinstellbare Zeitspanne in Schließstellung schaltet.

7. Viehtränke nach Anspruch 6, **dadurch gekennzeichnet, dass** ein Leerstandssensor (8) am Becken (1) mit einer Wirkverbindung zur Steuereinrichtung (9) vorgesehen ist, wobei das elektrisch betätigte Ventil (4') nur bei gemeldetem Leerstand des Beckens (1) wieder in Offenstellung schaltbar ausgebildet ist.

8. Viehtränke nach Anspruch 5, 6 oder 7, **dadurch gekennzeichnet, dass** das elektrisch betätigte Ventil (4, 4') ein Magnetventil, bevorzugt für 24 V Betriebsspannung, ist, wobei das Magnetventil (4) bei elektrischer Ansteuerung in Schließstellung schaltend ausgebildet ist.

9. Viehtränke nach einem der vorangehenden Ansprüche, **dadurch gekennzeichnet, dass** die Zeitschalteinrichtung (5) eine wiederkehrende Periode von 6 h, 12 h, 24 h, 48 h oder 7 Tagen hat.

10. Viehtränke nach einem der vorangehenden Ansprüche, **dadurch gekennzeichnet, dass** die voreinstellbare Zeitspanne 5 min. bis 2 h beträgt.
